Europäisches Patentamt

European Patent Office

Office européen des brevets

(19)

(11) **EP 1 286 476 A1**

(12) # EUROPEAN PATENT APPLICATION

(43) Date of publication:
   **26.02.2003 Bulletin 2003/09**

(51) Int Cl.7: **H04B 3/54**, H04B 3/56

(21) Application number: **01810821.7**

(22) Date of filing: **23.08.2001**

(84) Designated Contracting States:
   **AT BE CH CY DE DK ES FI FR GB GR IE IT LI LU
   MC NL PT SE TR**
   Designated Extension States:
   **AL LT LV MK RO SI**

(71) Applicant: **ABB RESEARCH LTD.
   8050 Zürich (CH)**

(72) Inventor: **Dzung, Dacfey
   5430 Wettingen (CH)**

(74) Representative: **Weibel, Beat
   ABB Patent Attorneys
   c/o ABB Business Services Ltd
   Intellectual proterty (SLE-I,
   Haselstrasse 16/699
   CH-5401 Baden (CH)**

(54) **Method for transmitting communication signals**

(57)     The communication signal (x) is coupled onto a first conductor (11) of the power transmission line by means of a first coupling device (21) and additionally onto at least one second conductor (12) by means of at least one second coupling device (22). In addition, the communication signal is being distorted prior to being coupled onto said first and second conductors.

By distorting the communication signal prior to being coupled onto the conductors radiation from the conductors can be influenced, i.e. reduced.

Fig.1

**Description**

Field of the Invention

The invention relates generally to communication systems and, more specifically, to a Powerline Communication (PLC) system using radio frequency communication signals coupled onto power transmission lines.
It relates to a method for transmitting a communication signal over a power transmission line according to the preamble of claim 1.

Background of the Invention

In PLC systems power transmission lines carry data-bearing communication signals from a transmitter to a receiver.
Current PLC systems use a capacitive or inductive coupler at the transmitter end to impress the communication signal onto a conductor of the transmission line. The signal propagates through the multiconductor transmission line and is decoupled at the receiver end. Even though the communication signal is only coupled onto one conductor of the transmission line, all conductors take part in the signal propagation, as described by the well-known transmission line theory. The receiver coupler may or may not be connected to the same conductor as the transmitter coupler, since there is strong cross-coupling between the conductors.
In addition to transmitting the communication signals, the transmission lines will also radiate unwanted spurious signals. This unwanted radiation is a superposition of the electromagnetic field generated by the signals on each conductor. The unwanted radiation is a result of the the conductors of the transmission line being operated in unbalanced mode, as described in *J.W.Cook et al, "The Noise and Crosstalk environment for ADSL and VDSL systems", May 1999, IEEE Commun. Mag., Vol. 37, No. 5, pp. 73-78*. In ideally balanced mode, e.g. of a two-wire transmission line, the currents on the conductors are exactly opposite, thus their emissions cancelled.
As described in more details in *M.D'Amore et al, "Electromagnetic field radiated from broadband signal transmission on power line carrier channels", April 1997, IEEE Transaction on Power Delivery, Vol. 12, No. 2, pp 624-631,* this problem is particularly relevant in PLC communication systems. Due to various non-ideal terminations and geometrical asymmetries the power transmission lines are not balanced at the typical radio frequencies used for data transmission signals.
In current practice, as described in *H.P.Kistner et al, "Powerline auf dem Prüfstand", April 1999, Funkschau, 10/99, pp. 28-33,* signal transmission power is limited by regulations in order to set limits to the level of radiation from the line.
Low transmission power however implies low signal-to-noise ratios at the receiver and thus limits link reliability.
In the pursuit of reducing radiation, other techniques besides power reduction have been investigated: e.g. reduced background polling frequency (traffic activity factor), filters, repeaters, power control or spread spectrum (*R. P.Rickard et al, "A Pragmatic Approach to Setting Limits to Radiation from Powerline Communications Systems", March 1999, 3rd International Symposium on Powerline Communications, Lancaster University*).

Summary of the Invention

One object of the invention is therefore to provide a method for transmitting a communication signal over a power transmission line of the initially-mentioned type which allows increased transmission power whilst minimising unwanted radiation.
This object is achieved by a method with the features of patent claim 1.
The communication signal is coupled onto a first conductor of the power transmission line by means of a first coupling device and additionally onto at least one second conductor by means of at least one second coupling device. In addition, the communication signal is being distorted in a controlled manner prior to being coupled onto said first and second conductors. After being decoupled from at least one of said conductors, the communication signal is being recovered by a communication receiver.
By distorting the communication signal prior to being coupled onto the conductors radiation from the conductors can be influenced, i.e. reduced. The two couplers may be interpreted as carrying the main communication signal and a radiation tuning signal, respectively.

Brief description of the Drawing

Details and advantages of the present invention will become more fully apparent from the following description, the claims and the accompanying drawing in which

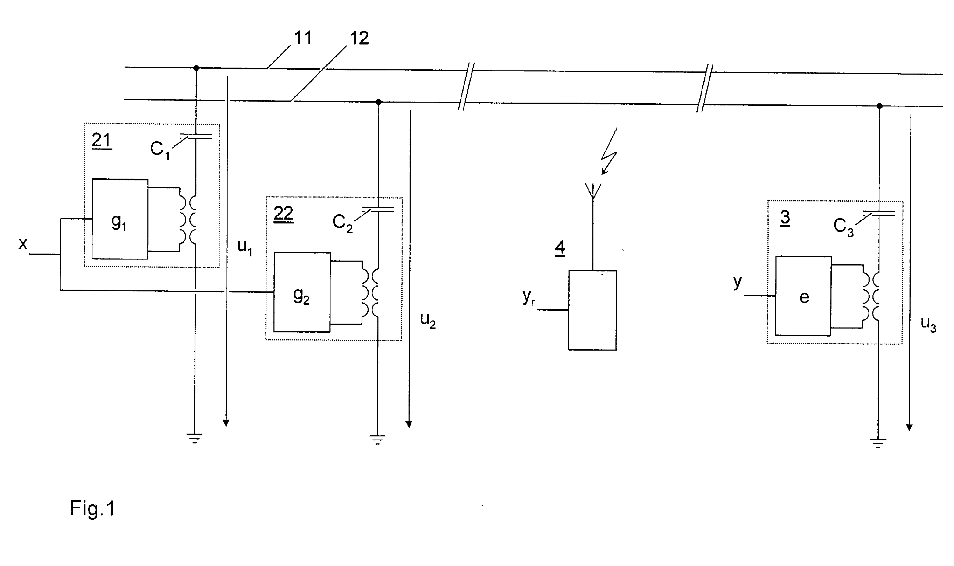

Fig. 1    shows schematically a communication network to be used with the inventive method.

Description of preferred embodiments

Fig. 1 shows a basic PLC communication network with the power line comprising two conductors 11 and 12.
At the transmitter side on the left there are two capacitive couplers 21 and 22. At the receiver side on the right there is one decoupling device 3.
The transmitter couplers 21 and 22 impress the voltages $u_1$ and $u_2$ between conductors 11 and 12 and ground potential. The signal propagates over the line and the receiver coupler 3 measures the useful signal voltage $u_3$. In general, $u_3$ is a given by a superposition of the effects from $u_1$ and $u_2$ (signal transfer function), i.e.

$$u_3 = h_1 {}^*u_1 + h_2 {}^*u_2 \qquad\qquad \text{[Equ 1]}$$

where $h_i {}^* u_i$ denotes the convolution of a signal $u_i$ with a channel impulse response $h_i$, i.e.

$$h_i {}^* u_i(n) = \sum_k h_i(k)u_i(n-k). \qquad\qquad \text{[Equ 2]}$$

Similarly, the unwanted radiation, measured e.g. by a radio receiver 4 placed at a test location, can be described as radiation transfer function

$$y_r = h_3 {}^* u_1 + h_4 {}^* u_2. \qquad\qquad \text{[Equ 3]}$$

With this simplified model, detailed description of the invention is as follows:
In a first step the channel impulse responses $h_1$, $h_2$, $h_3$, and $h_4$ have to be determined. In principle these could be calculated as described in the above-mentioned *M.D'Amore et al,* however, in practice direct measurements are a more realistic procedure.
Standard measurement methods exist, typically using pseudo-random measurement signals as described in *J.G.Proakis, "Digital Communications*", *1983, McGraw-Hill:*
For example, $h_3$ in Equ 3 can be determined by transmitting a pseudo-random $u_1$ (while $u_2 = 0$) and correlating the received $y_r$ against a replica of the known signal $u_1$.
At the transmitter, the communication signal $x$ is predistorted by the linear filters $g_1$ and $g_2$ before being put onto the conductors, i.e.

$$\begin{aligned} u_1 &= g_1 {}^* x \\ u_2 &= g_2 {}^* x \end{aligned} \qquad\qquad \text{[Equ 4]}$$

$g_1$ and $g_2$ have to be determined in a second step.
The following optimisation is proposed: $g_1$ and $g_2$ are selected such that the power of the unwanted radiated electromagnetic field $y_r$

$$\overline{\left|y_r^2\right|} = E\left|y_r^2\right| \qquad\qquad \text{[Equ 5]}$$

is minimised, whilst keeping the useful signal power at the receiver

$$\overline{\left|u_3^2\right|} = E\left|u_3^2\right| = S \qquad\qquad \text{[Equ 6]}$$

at a desired level S.

In Equ 5 and Equ 6, the expectation is over the statistics of the communication signal $x$. $S$ is limited in practice by the transmitter power, its effect is a scaling factor on $g_1$ and $g_2$. Therefore Equ 5 and Equ 6 can equivalently be expressed as

$$\min_{\underline{g}=(g_1,g_2)} \frac{E|y_r^2|}{E|u_3^2|} . \qquad \text{[Equ 7]}$$

To continue, the optimisation Equ 7 must be expressed as an explicit function of the unknowns $g_1$ and $g_2$. Using Equ 3, Equ 4, and the definition Equ 2 of a convolution, Equ 5 can be written as

$$E|y_r^2| = E|h_3 {}^*g_1 {}^*x + h_4 {}^*g_2 {}^*x|^2 = \underline{g}^+ R_r \underline{g} \qquad \text{[Equ 8]}$$

where $\underline{g} = [g_1(0)\ g_1(1)\ ..\ g_2(0)\ g_2(1)\ ..]'$ and $R_r$ is a positive Hermitian matrix involving $h_3$, $h_4$, and the correlation function $R_{xx}(\tau)$ of $x$.

Similarly, using Equ 1 and Equ 4,

$$E|u_3^2| = E|h_1 {}^*g_1 {}^*x + h_2 {}^*g_2 {}^*x|^2 = \underline{g}^+ R\ \underline{g} \qquad \text{[Equ 9]}$$

with the matrix $R$ given by $h_1$, $h_2$, and $R_{xx}(\tau)$. Hence Equ 7 becomes

$$\min_{g=(g_1,g_2)} \frac{\underline{g}^+ R_r\ \underline{g}}{\underline{g}^+ R\ \underline{g}} . \qquad \text{[Equ 10]}$$

Equ 10 is the criterion to determine $\underline{g}$. The quotient in Equ 10 is recognised as the Rayleigh quotient pertaining to the generalised eigenvalue problem described in *G.Strang*, *"Linear Algebra and its Applications*", *1988, Hartcourt Brace Jovanovich.*

$$R_r \underline{g} = \lambda R \underline{g}. \qquad \text{[Equ 11]}$$

There are standard numerical methods to determine the solution $\underline{g}$ of Equ 11 corresponding to the minimum eigenvalue $\lambda$.

This solution is then used as the optimum predistortion filters in Equ 4 to be used at the transmitting end.

In a third an final step, the transmitted signal has to be recovered by a communication receiver. The receiver 3 must calculate an estimate $y$ of the original transmission signal $x$ from the receiver coupler signal $u_3$, typically by a linear filter $e$,

$$y = e^* u_3. \qquad \text{[Equ 12]}$$

Various estimators are known, a suitable method is for example given by the minimum mean square error channel equaliser, which is described in the above-mentioned *J.G.Proakis:* The filter $e$ is determined such that the mean square error

$$E|y - x|^2 = E|e^*(h_1 {}^*g_1 {}^*x + h_2 {}^*g_2 {}^*x + n) - x|^2 \qquad \text{[Equ 13]}$$

is minimised over $e$.

It is assumed here that $h_1$, $g_1$, $h_2$, and $g_2$ are known at the receiver. In practice, this can be achieved by an appropriate start-up procedure.

In Equ 13, the additional term $n$ models additive noise in $u_3$ (not included in Equ 1) and the expectation is therefore over the statistics of both $x$ and $n$. - The minimisation of Equ 13 with respect to $e$ is a standard problem whose solution is also described in above-mentioned *J.G.Proakis.*

The following is an example on how to determine linear filters $g_1$ and $g_2$ as described above:

A scalar case is considered where the wanted signal is $u_3 = u_2$ and the unwanted radiated signal is $y_r = u_1 - u_2$, i.e. $h_1 = 0$, $h_2 = 1$, $h_3 = 1$, and $h_4 = -1$.

Minimising the radiation Equ 8

$$E|y_r^2| = E|g_1 x - g_2 x|^2$$

under the constraint of Equ 6 on the received power (Equ 9)

$$E|u_3^2| = E|g_2 x|^2 = S$$

leads to the solution

$$g_1 = g_2 = \sqrt{S}.$$

In this case the signal $u_1$ from the coupler 21 to conductor 11 can be interpreted as a radiation cancellation signal, while $u_2 = u_3$ on the conductor 12 is the main communication signal.

The minimisation of unwanted radiation is achieved at the price of two couplers at the transmitter side. In special cases, it might be possible that a *single* coupler at the transmitter with proper predistortion is sufficient for cancellation of unwanted radiation (e.g. $g_1 = 0$). However, the general case will require at least 2 couplers, as illustrated in the simple example above.

The channel transfer functions $h_3$ and $h_4$ for the unwanted radiation are in general dependent on the location and the antenna type of the test receiver. The radiation is therefore strictly minimised only at the given location and for this receiver. However, depending on the line geometry and the wavelength of the PLC communication signal $x$, the unwanted radiation should also be low in the vicinity of the test location. As a generalisation, it is possible to use more than two couplers where there are more than two conductors for the transmission line, and to optimise the predistorters with respect to the sum of the radiated power at several test points.

It is to be understood that within the scope of the appended claims, the invention may be practiced otherwise than as specifically described herein, e.g. with transmission lines comprising any number of conductors.

List of Reference Symbols

| | |
|---|---|
| 11, 12 | Power transmission Line, Conductors |
| 21, 22 | Coupling device, Transmitter |
| 3 | Decoupling Device, Receiver |
| 4 | Radio Receiver |
| $C_1$, $C_2$, $C_3$ | Coupling Capacitors |
| e, $g_1$, $g_2$ | Filter |
| $u_1$, $u_2$, $u_3$ | Voltage |
| x, y, $y_r$ | Communication signals |

**Claims**

1. Method for transmitting a communication signal (x) over a power transmission line with at least two conductors (11, 12), said method comprising the steps of

   - coupling the communication signal (x) onto at least one first conductor (11) of the power transmission line by means of a first coupling device (21), and

   - decoupling the communication signal (y) from at least one of the conductors (12) of the power transmission line by means of a decoupling device (3),

      **characterized in, that**

   - the communication signal (x) is additionally being coupled onto at least one second conductor (12) by means of at least one second coupling device (22), that

   - the communication signal (x) is being distorted in a controlled manner prior to being coupled onto said first and second conductors (11, 12), and that

   - the communication signal (y) is being recovered by a communication receiver after being decoupled from at least one of said conductors (12).

2. The method of Claim 1, **characterized in, that**

   - a radiation transfer function describing the radiation ($y_r$) of the transmission line due to the distorted communication signal (x) is measured by at least one radio receiver (4), and/ or that

   - a signal transfer function describing the channel between the coupling devices (21, 22) and the decoupling device (3) is measured, and that

   - said radiation transfer function and/ or said signal transfer function are/ is being used to determine the distortion of the communication signal (x).

3. The method of Claim 1, **characterized in, that**

   - a radiation transfer function describing the radiation ($y_r$) of the transmission line due to the distorted communication signal (x) is calculated, and/ or that

   - a signal transfer function describing the channel between the coupling devices (21, 22) and the decoupling device (3) is calculated, and that

   - said radiation transfer function and/ or said signal transfer function are/ is being used to determine the distortion of the communication signal (x).

4. The method of Claim 2 or 3, **characterized in, that**

   - linear filters ($g_1$, $g_2$) for distorting the communication signal (x) are determined such that the sum of the power of the radiated electromagnetic field ($y_r$) observed by one or more radio receivers (4) is minimised, whilst the signal power at the receiving decoupling device is being kept at a desired level, and that

   - said determination is performed by solving a constrained quadratic minimisation problem in terms of the coefficients of said linear distortion filters ($g_1$, $g_2$), using said radiation transfer function and said signal transfer function as parameters.

Fig. 1

**European Patent Office**

## EUROPEAN SEARCH REPORT

Application Number

EP 01 81 0821

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 037 678 A (RICKARD ROBIN PAUL) 14 March 2000 (2000-03-14) * column 4, line 20 – line 44 * * column 5, line 57 – column 6, line 56; figures 4-6 * | 1-3 | H04B3/54 H04B3/56 |
| X | WO 98 06188 A (NORTHERN TELECOM LTD ;RICKARD ROBIN PAUL (GB)) 12 February 1998 (1998-02-12) * page 4, line 4 – line 36 * * page 8, line 32 – page 9, line 20 * | 1-3 | |
| A | US 5 684 450 A (BROWN PAUL ANTHONY) 4 November 1997 (1997-11-04) * abstract * | 1-4 | |

**TECHNICAL FIELDS SEARCHED** (Int.Cl.7)

H04B

The present search report has been drawn up for all claims

| Place of search | Date of completion of the search | Examiner |
|---|---|---|
| THE HAGUE | 11 October 2001 | De Iulis, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 81 0821

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2001

| Patent document cited in search report | | Publication date | Patent family member(s) | | Publication date |
|---|---|---|---|---|---|
| US 6037678 | A | 14-03-2000 | AU | 8233398 A | 08-02-1999 |
| | | | AU | 9275798 A | 27-04-1999 |
| | | | EP | 1021867 A2 | 26-07-2000 |
| | | | WO | 9903209 A2 | 21-01-1999 |
| | | | WO | 9918675 A2 | 15-04-1999 |
| WO 9806188 | A | 12-02-1998 | AU | 3701697 A | 25-02-1998 |
| | | | EP | 0916194 A1 | 19-05-1999 |
| | | | WO | 9806188 A1 | 12-02-1998 |
| US 5684450 | A | 04-11-1997 | AT | 198521 T | 15-01-2001 |
| | | | AU | 673388 B2 | 07-11-1996 |
| | | | AU | 5373294 A | 09-05-1994 |
| | | | CA | 2146648 A1 | 28-04-1994 |
| | | | DE | 69329827 D1 | 08-02-2001 |
| | | | DE | 69329827 T2 | 13-06-2001 |
| | | | EP | 1050975 A1 | 08-11-2000 |
| | | | EP | 0667067 A1 | 16-08-1995 |
| | | | FI | 951844 A | 18-04-1995 |
| | | | WO | 9409572 A1 | 28-04-1994 |
| | | | GB | 2272350 A ,B | 11-05-1994 |
| | | | GB | 2304013 A ,B | 05-03-1997 |
| | | | HK | 125897 A | 19-09-1997 |
| | | | HK | 125997 A | 19-09-1997 |
| | | | JP | 8505272 T | 04-06-1996 |
| | | | NO | 951500 A | 20-04-1995 |
| | | | NZ | 257356 A | 26-08-1998 |
| | | | NZ | 329593 A | 29-07-1999 |
| | | | US | 6172597 B1 | 09-01-2001 |
| | | | US | 6282405 B1 | 28-08-2001 |
| | | | US | 6144292 A | 07-11-2000 |
| | | | US | 5929750 A | 27-07-1999 |
| | | | US | 5933071 A | 03-08-1999 |

EPO FORM P0459

For more details about this annex : see Official Journal of the European Patent Office, No. 12/82